# EUROPEAN PATENT SPECIFICATION

(11) **EP 0 567 511 B1**
(45) Date of publication and mention of the grant of the patent: **23.08.1995**
(21) Application number: 92902964.3
(22) Date of filing: 15.01.1992
(51) Int. Cl.: F16L 59/02

(54) **ARRANGEMENT FOR PREVENTING CONDENSATE FROM DEPARTING IN LIQUID PHASE FROM A COOLING SURFACE**
VORRICHTUNG ZUM VERHINDERN DES ENTSCHWINDENS VON KONDENSAT IN FLÜSSIGER PHASE VON EINER KÜHLFLÄCHE
DISPOSITIF SERVANT A PREVENIR L'ECHAPPEMENT EN PHASE LIQUIDE D'UN CONDENSAT D'UNE SURFACE DE REFROIDISSEMENT

(30) Priority: 15.01.1991 SE 9100129
(43) Date of publication of application: 03.11.1993
(73) Proprietor: NORDINNOVATION AB, S-114 30 Stockholm (SE)
(72) Inventor: SKOGSTRÖM, Lars, S-138 00 Älta (SE); JOHANNESSON, Gudni, S-135 34 Tyresö (SE)
(74) Representative: Billberg, Hans
(86) International application number: SE9200024
(87) International publication number: WO9213228

(56) References cited:
- EP-A- 0 297 612
- DERWENT'S ABSTRACT No. 410 16 E/20, SU 848 871, publ. week 8220 SIBE GAS-OIL CONS.

## Description

The present invention relates to an arrangement of piping for the conveyance of liquid at a temperature lower than the dew point of the ambient air, where said piping has been provided externally with one single material layer applied directly to the outside of the piping, the material having an insulation capacity such that the surface temperature of the piping can still be below said dew point.

It is known to insulate cooling surfaces for preventing condensation on the tube and liquid dropping from it.
Insulated coolant conveying pipes in an indoor climate have a minimum delivery line temperature of 14°C to such as an air conditioning unit, ceiling mounted cooling elements with or without inlet air, radiation-convection systems for cooling inlet air and heating, in order to deal with the risk of condensation. By lowering this temperature a number of degrees, the available temperature drop is increased, and thus the capacity of the installation, or alternatively the plant cost for a given capacity. Insulating the delivery piping with a vapour-proof insulation allows a higher surface temperature to the surroundings and the temperature in the piping can be lowered. This method is effective, but expensive, and cannot be applied to the cooling elements themselves, since the intended cooling of ambient air would then cease. EP 0 297 612 discloses an insulation consisting of one insulating layer surrounded by a watertight casing.
This casing is surrounded by a second insulating layer, which has an envelope preventing water to enter and come into contact with the watertight casing. Water being trapped in the second insulating layer is conducted away through the envelope. This arrangement is complicated and still more expensive.

The object of the present invention is to systematically utilize a moisture - absorbing and capillarily conducting surface layer, such as to lower the delivery line temperature in a coolant conveying line and cooling elements in a normal indoor climate, without the formation of injurious drops of condensation. Since this object is achieved in accordance with the invention the risk of surface condensation can also be prevented for other types of water piping, e.g. such as are included in roof water removal systems, where the piping is laid under the ceiling inside a building.

The features characterizing the invention and fulfilling the purpose mentioned above are disclosed in the accompanying claims.

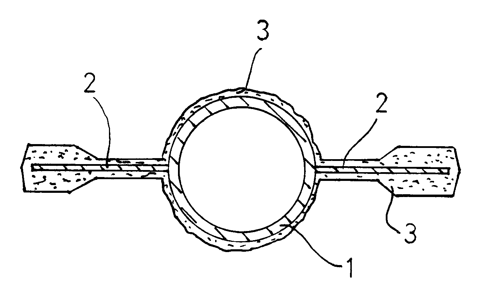

An embodiment of the invention, with variations, will now be described while referring to the accompanying drawing figure.

The accompanying drawing figure is a cross section of a tube of an air cooler.

A tube 1 thus contains a coolant at a temperature under the dew point of the air surrounding the tube. The latter is provided with two cooling fins or flanges 2 for heat exchange with the air. The flanges 2 are specially formed such as to have poorer heat conduction towards their tips, resulting in that the temperature there is above the dew point of the ambient air. On the outside of the tube there is a layer 3 of suitable material that can transport moisture both in vapour and liquid phase. The layer may be said to be hygroscopic, and is also applied over the flanges.

The layer 3 has been given a thickness or composition such that the liquid is caught up in it, and since drying out takes place at the tips of the flanges, the layer has the effect of sucking and transporting the liquid out to the tips, where the liquid dries out. This can thus take place if the layer has a suitable thickness and the temperature conditions are correct, which thus involves that a sufficient amount of liquid may be caught in the layer and dried out to a sufficient extent towards the tips of the flanges. Applicable at the same time is that the thickness of the layer on tube and flanges is minimised such that the cooling effect is maintained or increased, but even so is sufficient to absorb the condensed moisture and to transport it by capillary action towards the flange tips where, as previously mentioned, the temperature is greater and drying-out can take place. With this implementation of the cooling tube, the coolant temperature may continously be under the dew point of the ambient air, without risk of condensation from the ambient air and the formation of liquid drops, in spite of maintained or improved cooling effect.

Alternatively to the illustrated embodiment, the cooling flanges or cooling surfaces may be connected to the tube in such a way that a weakened thermal contact is obtained, thus causing the details to have a higher temperature, so that drying out can take place there.

The inventive concept may also be expressed by saying that the tube is insulated with a porous moisture-absorbing composition, such that a given temperature rise towards the surroundings is obtained, but primarily that the liquid or vapour is led by capillary action to warmer parts of the tube where the moisture can depart.

## Claims

1. Arrangement of piping (1) for the conveyance of liquid at a temperature lower than the dew point of the ambient air, where said piping (1) has been provided externally with one single material layer (3) applied directly to the outside of the piping (1), the material having an insulation capacity such that the surface temperature of the piping (1) can still be below said dew point, **characterized** in that said layer (3) is hygroscopic being able to transport the moisture in both vapour and liquid phase and that the piping (1) is made with flanges (2) or other surface increasing means, which creates a temperature distribution, such that surface areas are obtained where the surface temperature is above the dew point of the ambient air, the flanges (2) or surface increasing means also being covered by the hygroscopic layer (3) for transporting the condensate accumulated in the layer on the outside of the piping (1) to the surface areas.

2. Arrangement according to claim 1, **characterized** in that the tube (1) or cooling surface has connected details having weakened thermal contact with the coolant, such that the temperatures of the details will be raised and drying out can take place there.

## Patentansprüche

1. Anordnung von Rohrleitungen (1) für den Transport von Flüssigkeit bei Temperaturen unterhalb des Taupunktes der Umgebungsluft, wobei die Rohrleitungen (1) von außen mit einer einzigen Materialschicht (3) versehen sind, die direkt auf die Außenseite der Rohrleitungen (1) aufgebracht ist und wobei das Material eine derartige Isolierungskapazität besitzt, daß die Oberflächentemperatur der Rohrleitungen (1) auch unterhalb des Taupunktes liegen kann, dadurch **gekennzeichnet**, daß die Schicht (3) hygroskopisch ist und die Feuchtigkeit sowohl in dampfförmiger als in flüssiger Phase zu transportieren vermag, und daß die Rohrleitungen (1) mit Flanschen (2) oder anderen oberflächenvergrößernden Einrichtungen ausgerüstet sind, die für eine Temperaturverteilung derart sorgen, daß man Oberflächen erhält, bei denen die Oberflächentemperatur oberhalb des Taupunktes der Umgebungsluft liegt, wobei die Flansche (2) oder oberflächenvergrößernden Einrichtungen ebenfalls von der hygroskopischen Schicht (3) bedeckt sind zum Transport des in der Schicht auf der Außenseite der Rohrleitungen (1) angesammelten Kondensats zu den Oberflächen.

2. Anordnung nach Anspruch 1, dadurch **gekennzeichnet**, daß das Rohr (1) oder die Kühloberfläche verbundene Elemente besitzt, die einen abgeschwächten thermischen Kontakt mit dem Kühlmittel derart aufweisen, daß die Temperaturen der Elemente erhöht sind und hier eine Austrocknung stattfinden kann.

## Revendications

1. Disposition de tubulure (1) pour transporter un liquide à une température inférieure au point de rosée de l'air ambiant, dans laquelle ladite tubulure (1) a été munie à l'extérieur d'une couche unique de matière (3) appliquée directement sur la face extérieure de la tubulure (1), la matière ayant une capacité d'isolation telle que la température en surface de la tubulure (1) peut encore être en dessous dudit point de rosée, caractérisée en ce que ladite couche (3) est hygroscopique et est capable de transporter l'humidité aussi bien en phase vapeur qu'en phase liquide et en ce que la tubulure (1) est pourvue d'ailettes (2) ou d'autres moyens d'augmentation de surface, qui engendrent une distribution de température telle que des zones de surfaces sont obtenues où la température en surface est au-dessus du point de rosée de l'air ambiant, les ailettes (2) ou moyens d'augmentation de surface étant aussi recouverts par la couche hygroscopique (3) afin de transporter le condensat accumulé dans la couche sur la face extérieure de la tubulure (1) vers les zones de surface.

2. Disposition selon la revendication 1, caractérisée en ce que le tube (1) ou la surface de refroidissement a des détails de liaison présentant un contact thermique affaibli avec, le réfrigérant, de sorte que les températures des détails seront élevées et qu'une évaporation pourra y avoir lieu.
